# DEMANDE DE BREVET EUROPEEN

(11) **EP 1 038 731 A1**
(43) Date de publication de la demande: **27.09.2000**
(21) Numéro de dépôt: 00400690.4
(22) Date de dépôt: 13.03.2000
(51) Int. Cl.: B60R 13/02, B60R 16/02

(54) **Garniture de pavillon de véhicule automobile**

(30) Priorité: 22.03.1999 FR 9903524
(71) Demandeur: Société Anonyme SYLEA, 78190 Montigny le Bretonneux (FR)
(72) Inventeur: Guyon, Patrick, 78320 Levis Saint-Nom (FR)
(74) Mandataire: Faber, Jean-Paul

(57) **Abrégé**

Garniture de pavillon de véhicule automobile, du type comprenant une nappe de matière textile avec un certain nombre d'appareillages électriques tels que plafonniers (15), haut-parleurs (17), rappels de feu de stop (22), caractérisée en ce qu'elle est formée de plusieurs épaisseurs (2, 3) entre lesquelles sont insérés un conducteur plat principal (4) comportant une série de pistes et des conducteurs secondaires (5) comportant des pistes, des ouvertures (7, 8, 9, 10, 11, 12) étant ménagées dans lesdites épaisseurs (3, 4), ouvertures correspondant à l'emplacement des différents appareillages, les conducteurs plats (4, 5) débouchant dans les ouvertures (7, 8, 9, 10, 11, 12) et les appareillages étant agencés pour, d'une part, être reliés électriquement aux conducteurs plats correspondants et, d'autre part, pour se fixer dans l'ouverture correspondante, l'un des appareillages comportant des moyens pour relier électriquement, à une source d'alimentation du véhicule, le conducteur plat principal (4).

## Description

La présente invention concerne une garniture de pavillon de véhicule.

Les garnitures de pavillon de véhicule sont généralement constituées d'une matière textile fixée au pavillon et sur laquelle sont disposés différents appareillages électriques tels que plafonniers, rappel de feu de stop, haut-parleurs, etc...

Généralement, on prévoit un câblage pour l'alimentation de ces appareillages, on les branche et on les fixe, ce qui représente un travail important.

L'un des buts de l'invention est de remédier à cet inconvénient.

La garniture, selon l'invention, est du type comprenant une nappe de matière textile avec un certain nombre d'appareillages électriques tels que plafonniers, haut-parleurs, rappels de feu de stop, et est caractérisée en ce qu'elle est formée de plusieurs épaisseurs entre lesquelles sont insérés un conducteur plat principal comportant une série de pistes et des conducteurs secondaires comportant des pistes, des ouvertures étant ménagées dans lesdites épaisseurs, ouvertures correspondant à l'emplacement des différents appareillages, les conducteurs plats débouchant dans les ouvertures et les appareillages étant agencés pour, d'une part, être reliés électriquement aux conducteurs plats correspondants et, d'autre part, pour se fixer dans l'ouverture correspondante, l'un des appareillages comportant des moyens pour relier électriquement, à une source d'alimentation du véhicule, le conducteur plat principal.

Grâce à cette disposition, on peut réaliser une garniture complète prête à être posée et dont tous les appareillages pré-câblés peuvent automatiquement être branchés sur le circuit d'alimentation du véhicule.

De préférence, les appareillages électriques comprennent un support pour les dispositifs électriques, ledit support présentant un rebord venant coopérer avec la surface de la garniture adjacente à l'ouverture, un circuit imprimé souple pour l'alimentation desdits dispositifs électriques et une platine pourvue d'alvéoles pour la réception des contacts des dispositifs électriques, des moyens étant prévus pour l'assemblage du support sur la platine en pinçant la surface adjacente de l'ouverture de la garniture entre la platine et le rebord. Ainsi, les appareillages peuvent rapidement être branchés sur les conducteurs plats et fixés sur la garniture.

Suivant une caractéristique de détail, la platine comporte des moyens pour relier électriquement le conducteur plat au circuit imprimé souple d'alimentation des dispositifs électriques.

Suivant un détail constructif, la platine comporte, articulé, un volet entre lequel et une surface d'appui peuvent être pincés, le conducteur plat et un prolongement du circuit imprimé souple d'alimentation des dispositifs électriques, le prolongement comportant des pistes d'alimentation destinées à venir coïncider avec les pistes du conducteur plat et des moyens étant prévus pour verrouiller ledit volet.

De préférence, la surface d'appui comporte une gouttière et le volet une protubérance correspondante.

Enfin, suivant une dernière caractéristique, l'un des appareillages électriques comporte un élément de connecteur, un élément de connecteur complémentaire étant fixé sur le pavillon du véhicule et relié par des conducteurs au circuit d'alimentation électrique du véhicule, les éléments comportant des plots de contact destinés à être appliqués les uns contre les autres après insertion du conducteur plat principal de manière à alimenter celui-ci. Ainsi, lors de la pose de la garniture, on insère entre les plots des deux éléments du connecteur le conducteur plat, l'ensemble des différents appareillages étant automatiquement branchés.

L'invention va maintenant être décrite avec plus de détails en se référant à un mode de réalisation particulier donné à titre d'exemple seulement et représenté aux dessins annexés, dans lesquels :

Figure 1 montre en perspective une garniture de pavillon d'un toit d'un véhicule au cours de son élaboration.

Figure 2 montre en perspective, par dessous, la garniture de la figure 1, les différents dispositifs électriques n'étant pas montés.

Figure 3 est une vue en perspective montrant les liaisons électriques entre les différents câbles plats de la garniture.

Figure 4 est une vue en coupe montrant un dispositif de liaison des câbles plats.

Figure 5 est une vue en perspective éclatée d'un plafonnier.

Figure 6 montre en perspective la liaison électrique du plafonnier de la figure 5.

Figure 7 est une vue en coupe montrant le plafonnier.

Figure 8 est une vue en perspective éclatée d'une variante du plafonnier de la figure 5.

Figure 9 est une vue en perspective imageant l'assemblage de la garniture sur le pavillon.

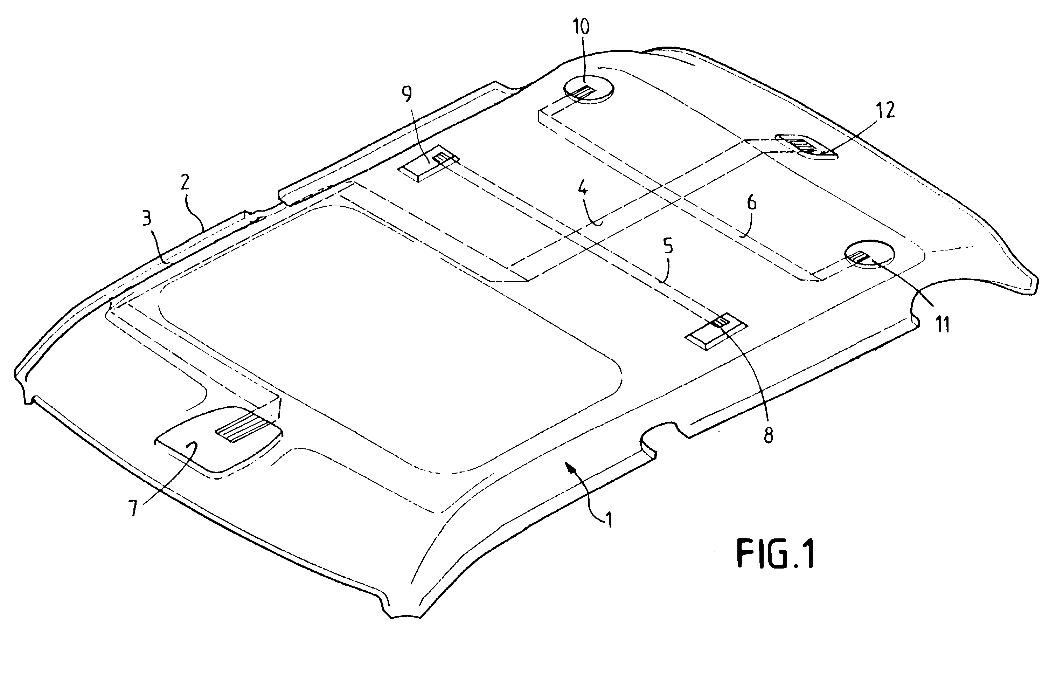

La figure 1 montre une garniture de pavillon désignée dans son ensemble par la référence 1 et constituée de plusieurs épaisseurs de matière textile 2, 3 entre lesquelles sont insérés un ensemble de conducteurs plats principal 4 avec plusieurs pistes conductrices et des conducteurs plats secondaires 5 et 6.

La garniture comporte des ouvertures 7, 8, 9, 10, 11 et 12 ; dans les ouvertures 7 et 12 s'étendent l'ensemble de conducteurs plats 4, tandis que dans les ouvertures 8 et 9 débouchent les extrémités du conducteur 5 et dans les ouvertures 10 et 11, les extrémités du conducteur 6.

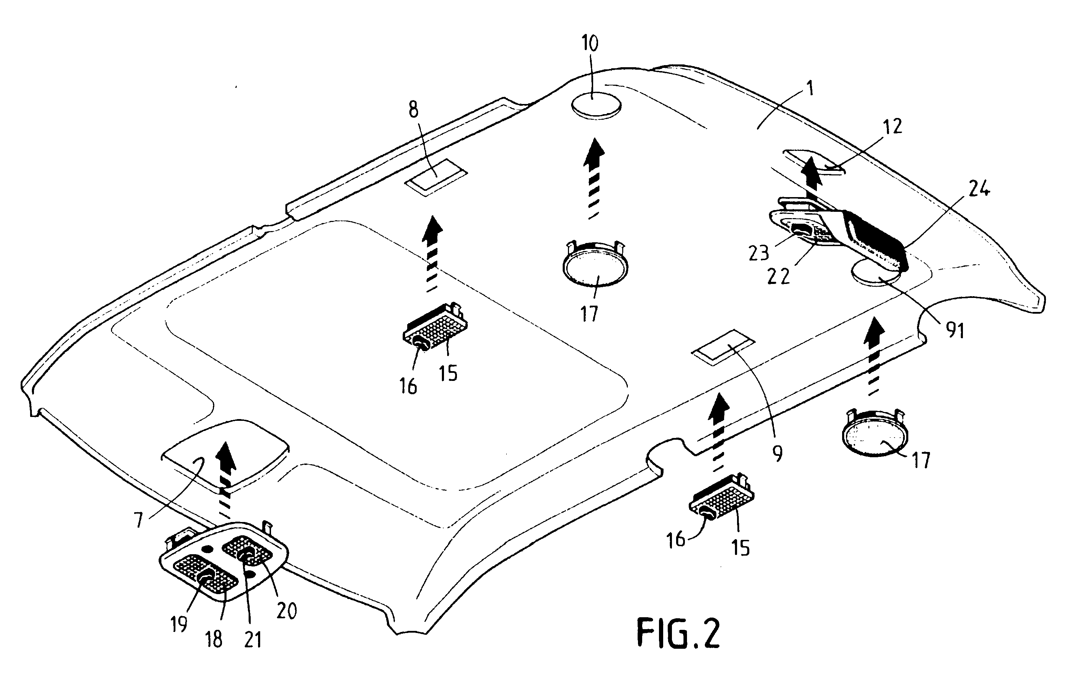

Comme on le voit à la figure 2, les ouvertures 8 et 9 sont destinées à recevoir des plafonniers 15 pourvus d'un interrupteur 16, tandis que les ouvertures 10 et 11 sont destinées à être garnies avec des haut-parleurs 17 d'une radio de bord du véhicule.

L'ouverture 7 est destinée à recevoir un ensemble comprenant un plafonnier 18 avec un interrupteur 19 et un lecteur de cartes 20 avec un interrupteur 21.

L'ouverture 12 est destinée à être garnie avec un plafonnier 22 pourvu d'un interrupteur 23 et un rappel 24 de la fonction stop du véhicule.

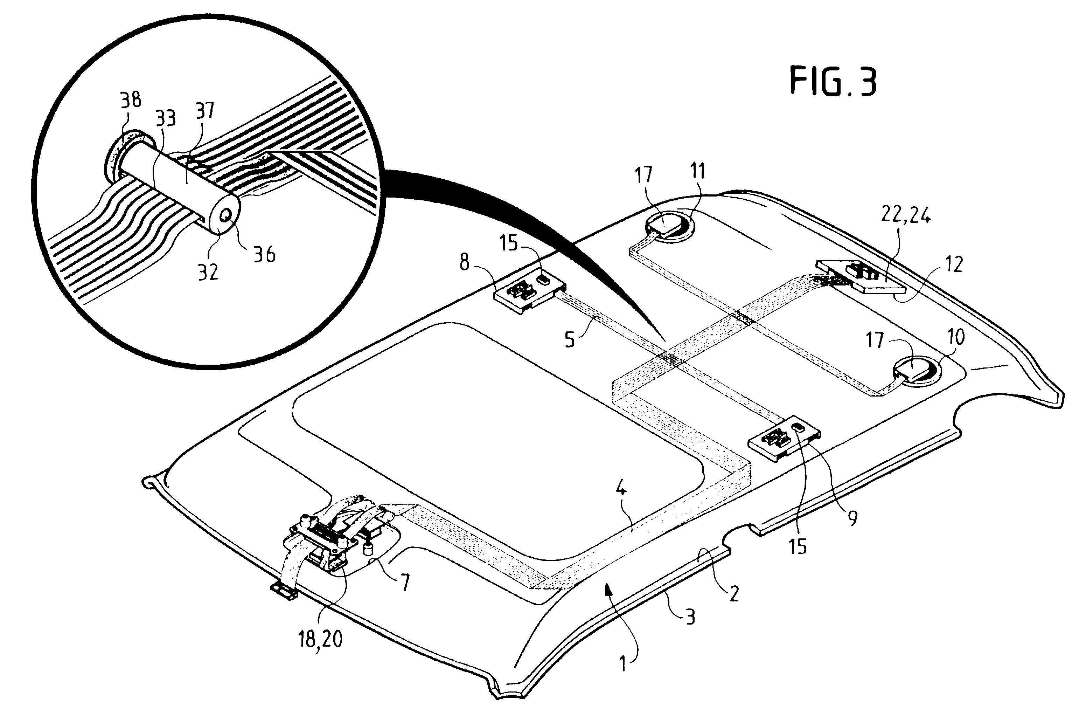

Comme on le voit à la figure 3, le conducteur plat principal 4 doit être électriquement relié aux conducteurs secondaires plats 5 et 6.

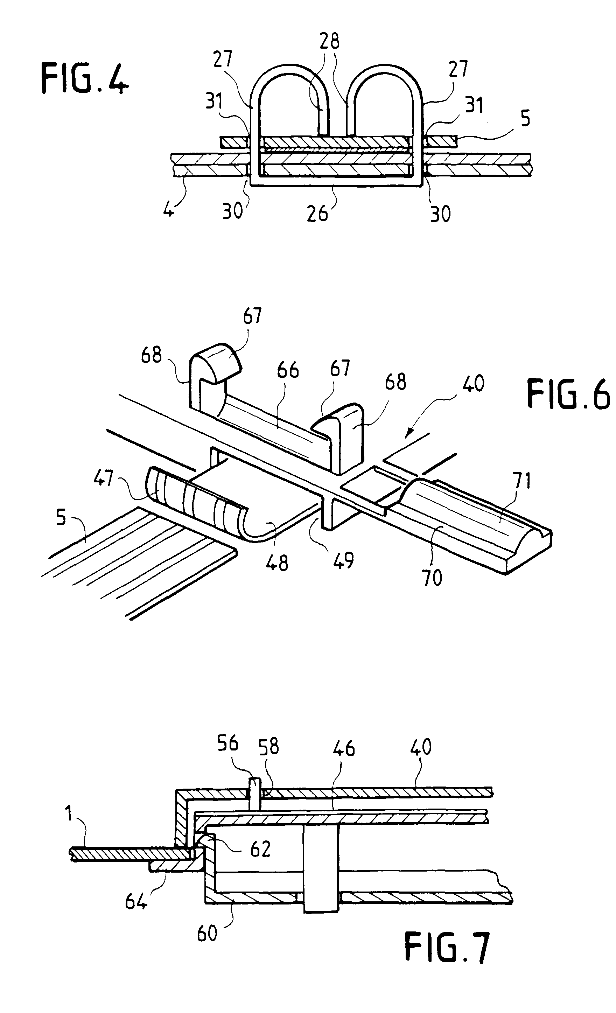

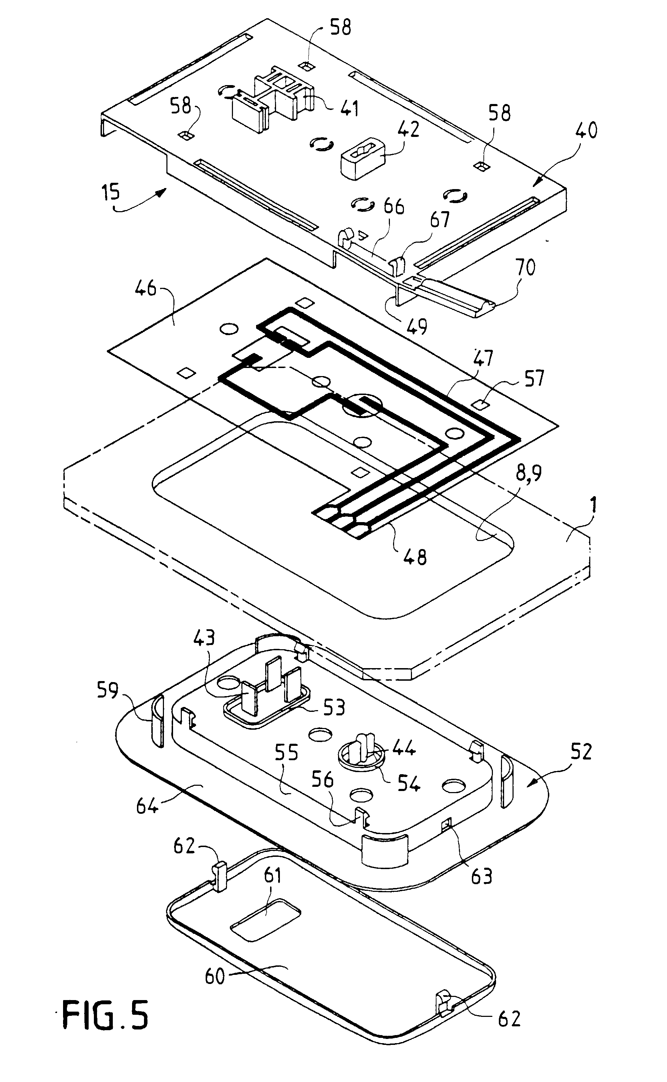

Ceux-ci peuvent être reliés avec de simples agrafes 25 en U présentant une âme 26 avec des ailes 27 prolongées par des retours 28. Les ailes traversent des trous 30 pratiqués dans l'isolant et la piste correspondante, tandis que les ailes 27 traversent des trous 31 prévus de part et d'autre de la piste du conducteur 6, les retours 28 permettant d'appliquer l'une sur l'autre les pistes correspondantes (voir figure 4).

On peut également relier le conducteur 4 au conducteur 5 par un organe 32 comprenant un axe 36 solidaire, à une extrémité, d'un bouton 35, l'axe étant logé dans un manchon 37 percé d'une fente 36, les conducteurs étant engagés dans la fente et le manchon étant pivoté sur l'axe afin que les pistes des conducteurs soient enserrées l'une contre l'autre.

La figure 5 montre en perspective éclatée le plafonnier 15, celui-ci comprenant une platine 40 avec des alvéoles 41 pour recevoir les contacts 43 de l'interrupteur 16 et les alvéoles 42 pour la réception des contacts 44 d'une lampe.

Contre la face inférieure de la platine 40 vient se loger un circuit souple 46 comportant des pistes 47 pour l'alimentation de la lampe avec interposition de l'interrupteur, le circuit souple comportant un prolongement 48 destiné à traverser une ouverture 49 de la platine 40.

Les extrémités des pistes 47, destinées à coopérer avec les contacts 43 et 44, s'insèrent avec ceux-ci dans les alvéoles correspondantes 41 et 42 pour réaliser la liaison électrique.

La platine 40 vient s'appliquer directement contre la garniture 1 au voinsage des ouvertures 8 ou 9.

Un support 52 comporte des organes de réception 53 pour l'interrupteur 15 et des organes de réception 54 pour les contacts 44 de la lampe, ledit support comportant une partie en saillie 55 et des organes de centrage 59 s'étendant à partir d'un rebord 64.

La partie en saillie 55 présente des crochets 56 qui sont destinés à traverser des trous 57 du circuit 46 et, après avoir traversé des trous 58 de la platine 40, assurer la fixation du support sur la platine, les organes 59 coopérant avec le bord de l'ouverture 51.

Enfin, le support 52 reçoit un diffuseur 60 présentant une ouverture 61 pour le passage de l'interrupteur 15 et deux crochets 62 coopérant avec des ouvertures 63 de la partie 55 du support 52.

Le plafonnier 15 se monte dans l'ouverture 8 ou 9 engageant, dans celle-ci, les organes 59, tandis que le circuit 46 et la platine 40 sont disposés du côté de la face de la garniture 1 destinée à épouser le pavillon du véhicule, cette garniture 1 se trouvant ainsi pincée entre le rebord 64 et la platine 40.

Avant de fixer le plafonnier 15 dans l'ouverture 8 ou 9, on branche celui-ci sur le conducteur plat 5 dont les extrémités débouchent dans lesdites ouvertures. La figure 6 permet de comprendre la réalisation de la liaison électrique.

La platine 40, au voisinage de l'ouverture 49, comporte une surface d'appui en forme de gouttière 66 et, aux extrémités dudit logement, deux pattes élastiques 68 dont les extrémités sont pourvues de crochets 67, ces derniers étant tournés en regard l'un de l'autre.

Sur un bord adjacent à l'ouverture 49 est articulé un volet présentant une protubérance 71 correspondant à la forme de la gouttière 66.

Pour réaliser la liaison électrique, on replie l'extrémité 48 de manière qu'elle vienne s'insérer entre les pattes 68, puis on applique contre celle-ci le conducteur plat 5 de manière que ses pistes viennent coïncider avec les pistes 47 et on rabat le volet 70 afin de le verrouiller entre les crochets 67. Ainsi, les conducteurs se trouvent pincés entre le fond de la gouttière 66 et la protubérance 71.

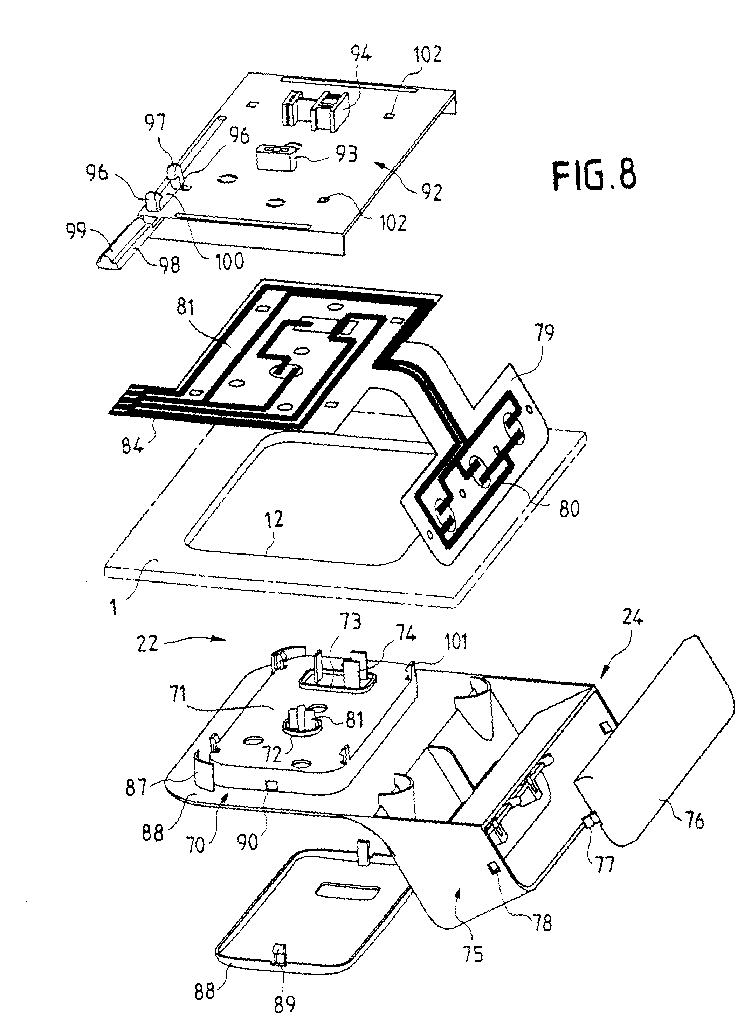

A la figure 8, on a représenté en perspective éclatée le plafonnier 22 avec le rappel de fonction stop 24. Celui-ci comporte un support 70 avec une partie en saillie 71 pourvue d'organes 72 et 73 pour la réception respectivement d'une lampe et de l'interrupteur 23 et dont les contacts 74 et 81 font saillie à la surface de la partie en saillie 71. Le support 70 est prolongé par un réceptacle 75 fermé par un diffuseur 76 pourvu de crochets 77 s'engageant dans des trous 78. Le réceptacle 75 est destiné à contenir trois lampes et reçoit une partie 79 d'un circuit imprimé 81 dont les pistes 80 alimentent lesdites lampes.

Le circuit imprimé 81 est destiné à l'alimentation de la lampe du plafonnier avec interposition de l'interrupteur 23 et est pourvu d'un prolongement 84.

Le support 70 comporte des guides 87 s'érigeant à partir d'un rebord 88 du support 70, la partie 79 du circuit imprimé traversant ladite ouverture pour se loger dans le réceptacle 75.

Sur le support 70 se monte un diffuseur 88 pourvu de crochets 89 s'insérant dans des trous 90 de la partie en saillie 71.

L'ensemble est complété par une platine 92 avec des alvéoles 93 et 94 destinées à recevoir des contacts 74 et 81 respectivement de l'interrupteur et de la lampe, contacts qui coopèrent avec les pistes correspondantes du circuit 81.

Comme pour le diffuseur 15, la platine 92 présente une ouverture à travers laquelle s'étend le prolongement 84, celui-ci, avec le conducteur plat 4, étant inséré entre des pattes élastiques 96 terminées par des crochets 97 permettant de bloquer un volet 98 présentant une protubérance s'insérant dans une surface d'appui en forme de gouttière 100.

Ainsi, la liaison électrique s'effectue comme pour le plafonnier 15.

Les organes de guidage 87 s'insèrent dans l'ouverture 12, le bord de l'ouverture coopérant avec le rebord 88, tandis que la platine 92 repose sur la face de la garniture 1 destinée à être tournée vers le pavillon, l'ensemble étant verrouillé par des crochets 101 traversant des trous 102 de la platine 92.

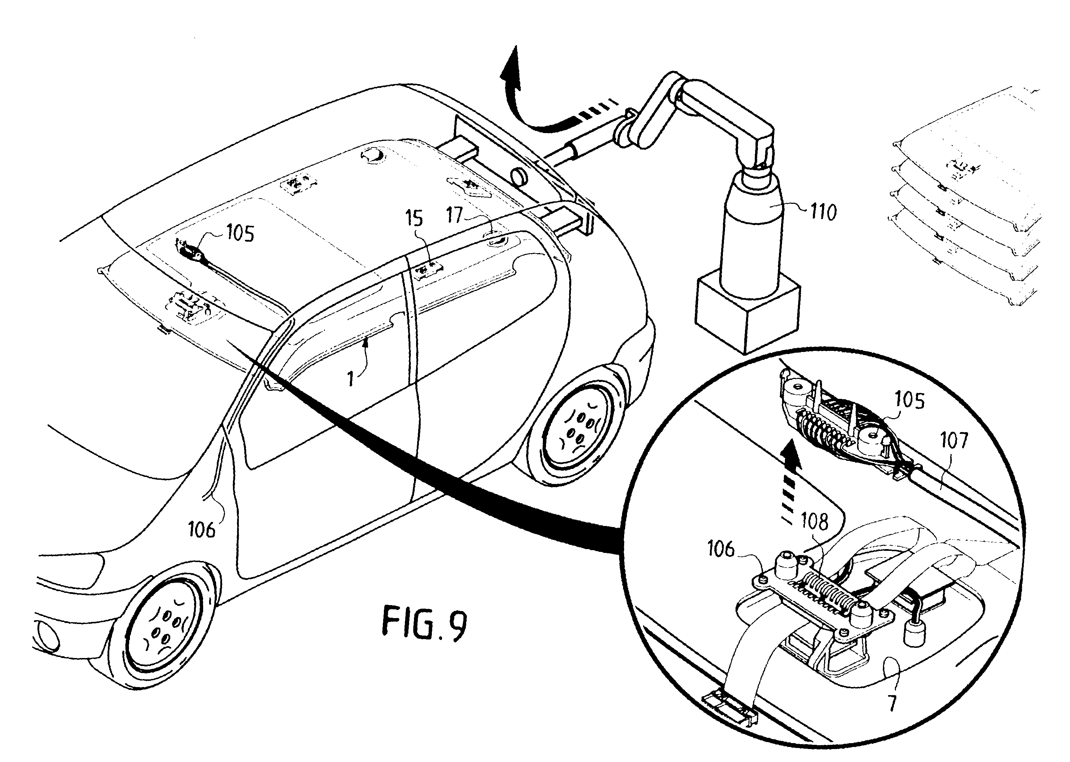

Le plafonnier 18 est monté de la même façon que les plafonniers 15 et 22 dans l'ouverture 7 de la garniture 1 (voir figure 9) ; toutefois, ce plafonnier est solidaire d'un élément de connecteur 106, un élément de connecteur électrique 105 complémentaire étant fixé sur le pavillon du véhicule et relié à la batterie dudit véhicule sur un câble avec une série de conducteurs 107.

L'élément 105 comporte des moyens pour la fixation des conducteurs 107 et qui sont reliés à des plots de contact destinés à coopérer avec des plots de contact 108 de l'élément 106, le conducteur plat 4 étant inséré entre ces plots de manière à assurer l'alimentation des différents dispositifs supportés par la garniture 1. Les deux éléments 105 et 106 sont assemblés par des vis, par exemple.

La garniture 1 est livrée avec tous les plafonniers, haut-parleurs, etc... montés dans les ouvertures correspondantes et branchés sur les conducteurs plats 4, 5 et 6, la garniture étant, avec un robot, mise en place contre le pavillon, le branchement électrique de l'ensemble s'effectuant en insérant le conducteur plat 4 entre les plots des éléments 105 et 106 du connecteur.

Les haut-parleurs 17 peuvent être réalisés de la même manière que les autres appareillages 15, 22 de manière à être branchés et montés très rapidement et très facilement.

Bien entendu, l'invention n'est pas limitée au mode de réalisation qui vient d'être décrit et représenté. On pourra y apporter de nombreuses modifications de détail sans sortir pour cela du cadre de l'invention.

## Revendications

1. Garniture de pavillon de véhicule automobile, du type comprenant une nappe de matière textile avec un certain nombre d'appareillages électriques tels que plafonniers (15), haut-parleurs (17), rappels de feu de stop (22), caractérisée en ce qu'elle est formée de plusieurs épaisseurs (2, 3) entre lesquelles sont insérés un conducteur plat principal (4) comportant une série de pistes et des conducteurs secondaires (5, 6) comportant des pistes, des ouvertures (7, 8, 9, 10, 11, 12) étant ménagées dans lesdites épaisseurs (3, 4), ouvertures correspondant à l'emplacement des différents appareillages, les conducteurs plats (4, 5) débouchant dans les ouvertures (7, 8, 9, 10, 11, 12) et les appareillages étant agencés pour, d'une part, être reliés électriquement aux conducteurs plats correspondants et, d'autre part, pour se fixer dans l'ouverture correspondante, l'un des appareillages comportant des moyens (105, 106) pour relier électriquement, à une source d'alimentation du véhicule, le conducteur plat principal (4).

2. Garniture de pavillon de véhicule automobile, selon la revendication 1, caractérisée en ce que les appareillages électriques comprennent un support (52) pour les dispositifs électriques, ledit support présentant un rebord (64) venant coopérer avec la surface de la garniture adjacente à l'ouverture, un circuit imprimé souple pour l'alimentation desdits dispositifs électriques et une platine (40) pourvue d'alvéoles (41, 42) pour la réception des contacts des dispositifs électriques, des moyens étant prévus pour l'assemblage du support (52) sur la platine en pinçant la surface adjacente de l'ouverture de la garniture entre la platine (40) et le rebord.

3. Garniture de pavillon de véhicule automobile, selon la revendication 2, caractérisée en ce que la platine comporte des moyens pour relier électriquement le conducteur plat (4, 5) au circuit imprimé souple d'alimentation des dispositifs électriques.

4. Garniture de pavillon de véhicule automobile, selon les revendications 2 et 3, caractérisée en ce que la platine comporte, articulé, un volet (70) entre lequel et une surface d'appui (66) peuvent être pincés le conducteur plat (4, 5) et un prolongement (48) du circuit imprimé souple d'alimentation des dispositifs électriques, le prolongement comportant des pistes d'alimentation destinées à venir coïncider avec les pistes du conducteur plat et des moyens (67) étant prévus pour verrouiller ledit volet (70).

5. Garniture de pavillon de véhicule automobile, selon la revendication 4, caractérisée en ce que la surface d'appui comporte une gouttière (66) et le volet, une protubérance (71) correspondante.

6. Garniture de pavillon de véhicule automobile, selon la revendication 1, caractérisée en ce que l'un des appareillages électriques comporte un élément de connecteur (106), un élément de connecteur complémentaire étant fixé sur le pavillon du véhicule et relié par des conducteurs au circuit d'alimentation électrique du véhicule, les éléments (105, 106) comportant des plots de contact (108) destinés à être appliqués les uns contre les autres après insertion du conducteur plat principal (4) de manière à alimenter celui-ci.
